# EUROPÄISCHE PATENTSCHRIFT

(11) **EP 3 679 081 B1**
(45) Veröffentlichungstag und Bekanntmachung des Hinweises auf die Patenterteilung: **31.03.2021**
(21) Anmeldenummer: 18755703.8
(22) Anmeldetag: 08.08.2018
(51) Int. Cl.: C08G 59/30, C08G 59/32, C08G 59/40

(54) **HARZZUSAMMENSETZUNG, PREPREGMATERIAL, VERBUNDBAUTEIL, UND VERFAHREN ZUR HERSTELLUNG DES VERBUNDBAUTEILS EINER HARZZUSAMMENSETZUNG**
RESIN COMPOSITION, PREPREG MATERIAL, COMPOSITE COMPONENT, AND METHOD FOR PRODUCING THE COMPOSITE COMPONENT AND A RESIN COMPOSITION
COMPOSITION DE RÉSINE, MATÉRIAU DE PRÉIMPRÉGNATION, ÉLÉMENT COMPOSITE, ET PROCÉDÉ POUR PRODUIRE UN ÉLÉMENT COMPOSITE ET UNE COMPOSITION DE RÉSINE

(30) Priorität: 14.08.2017 DE 102017007611; 07.10.2017 DE 102017009661
(43) Veröffentlichungstag der Anmeldung: 15.07.2020
(73) Patentinhaber: Diehl Aviation Laupheim GmbH, 88471 Laupheim (DE)
(72) Erfinder: PFETSCHER, André, 89079 Ulm (DE); HÄNLE, Christian, 89079 Ulm (DE); VÖLKLE, Dietmar, 88400 Biberach (DE); NEUMEYER, Thomas, 95447 Bayreuth (DE); BAKIS, Gökhan, 49078 Osnabrück (DE); ALTSTÄDT, Volker, 20099 Hamburg (DE)
(74) Vertreter: Diehl Patentabteilung
(86) Internationale Anmeldenummer: PCT/EP2018/000393
(87) Internationale Veröffentlichungsnummer: WO 2019/034280

(56) Entgegenhaltungen:
- EP-A2- 0 806 429
- Thomas Neumeyer: "Struktur und Eigenschaften neuer, flammgeschützter Prepreg-Matrixsysteme für Anwendungen in der Kabine von Verkehrsflugzeugen", , 31. Dezember 2015 (2015-12-31), XP055513785, Gefunden im Internet: URL:https://www.kunststoffe.de/_storage/as set/1282489/storage/master/file/21578522/d ownload/Dissertation%20Thomas%20Neumeyer%2 0-%20Struktur%20und%20Eigenschaften%20neue r,%20flammgesch%C3%BCtzter%20Prepreg-Matri xsysteme%20f%C3%BCr%20Anwendungen%20in%20d er%20Kabine%20von%20Verkehrsflugzeugen.pdf ? [gefunden am 2018-10-09] in der Anmeldung erwähnt

## Beschreibung

Die Erfindung betrifft eine Harzzusammensetzung für ein Prepregharz, umfassend ein Phosphor-modifiziertes Epoxidharz, eine weitere Epoxidharz-Komponente, einen Härter und ein Imidazoliumsalz als Initiator.

Die Druckschrift EP 0 806 429 A2 beschreibt flammfeste Epoxidharze und Flammschutzmittel für Epoxidharze. Die als Flammschutzmittel verwendeten Verbindungen basieren auf Derivation der 4-Hydroxy-butan-1-Phosphinsäure. Diese Verbindungen sollen allgemein in unterschiedlichsten Anwendungen von Epoxidharzsystemen eingesetzt werden. Eine gute Mischbarkeit der Verbindung mit Epoxidharzsystemen soll die breite Einsetzbarkeit des Flammschutzmittels ermöglichen.

Der Begriff "Phosphor-modifiziertes Epoxidharz" bedeutet, dass es sich um ein Epoxidharz handelt, an welches eine Phosphorverbindung chemisch (kovalent) angebunden ist.

Eine derartige Harzzusammensetzung ist aus der Dissertation Neumeyer, T.: Struktur und Eigenschaften neuer, flammgeschützter Prepreg-Matrixsysteme für Anwendungen in der Kabine von Verkehrsflugzeugen, 2015, ISBN 978-3946094012, bekannt.

Harzzusammensetzungen dieser Art eignen sich zur Herstellung von Prepreg-Decklagen von Sandwichstrukturen, die z. B. bei Verkehrsflugzeugen oder bei anderen Leichtbauanwendungen eingesetzt werden.

Diese Bauteile sowie die zur Herstellung der Bauteile eingesetzten Harze müssen bestimmte Brandschutzanforderungen erfüllen. In der Vergangenheit wurden zur Herstellung der Sandwichstrukturen überwiegend Phenolharze eingesetzt. Dabei besteht allerdings der Nachteil, dass bei der Aushärtung Kondensate freigesetzt werden, insbesondere Phenol und Formaldehyd, sodass besondere Maßnahmen zur Sicherstellung der Arbeitssicherheit ergriffen werden müssen.

In der oben zitierten Dissertation wird eine Harzzusammensetzung beschrieben, die die Brandschutzanforderungen erfüllt. Zudem weist die entwickelte Harzzusammensetzung nur geringe flüchtige Bestandteile auf, wodurch die Verarbeitbarkeit und die Arbeitssicherheit verbessert werden.

Voraussetzung für eine problemlose industrielle Verarbeitbarkeit ist, dass das Herstellen der Harzzusammensetzung und das Tränken eines Fasermaterials mit der Harzzusammensetzung problemlos durchgeführt werden können. In der Praxis tritt jedoch das Problem auf, dass die Harzzusammensetzung Phosphor-modifizierte Harze mit hohem Epoxidäquivalentgewicht enthält. Diese Monomere und die entstehenden Oligomere weisen eine geringe Beweglichkeit auf, weshalb sich die Aushärtungszeit verlängert. Aus wirtschaftlichen Gründen werden jedoch kurze Härtungszyklen angestrebt.

Der Erfindung liegt daher die Aufgabe zugrunde, eine Harzzusammensetzung anzugeben, die eine schnellere Aushärtung hochmolekularer, flammgeschützter Harze ermöglicht und die einfach zu verarbeiten ist. Ferner liegt der Erfindung die Aufgabe zugrunde, eine Harzzusammensetzung bereitzustellen, mit welcher mechanisch verbesserte und einfach herstellbare Verbundbauteile herstellbar sind.

Hierzu ist eine Harzzusammensetzung mit den Merkmalen des Anspruchs 1 vorgesehen.

Die erfindungsgemäße Harzzusammensetzung umfasst: ein Phosphor-modifiziertes Epoxidharz, eine weitere Epoxidharz-Komponente, einen Härter, ein Imidazoliumsalz als Initiator, sowie einen Reaktivverdünner in einem Anteil von 2-5 Gewichtsprozent.

Die erfindungsgemäße Harzzusammensetzung zeichnet sich dadurch aus, dass sie zur Verringerung der Viskosität einen Reaktivverdünner umfasst.

Das in der Harzzusammensetzung verwendete Phosphor-modifizierte Epoxidharz ist hochmolekular und daher hochviskos, Aufgrund des hohen Epoxidäquivalentgewichts ergibt sich insbesondere bei Kettenwachstumsreaktionen (z. B. durch Imidazole initiierte Homopolymerisationen) eine langsame Aushärtungsgeschwindigkeit. Der erfindungsgemäß vorgesehene Reaktivverdünner zeichnet sich durch ein niedriges Molekulargewicht aus, sodass die Harzzusammensetzung gut zu verarbeiten ist und eine schnelle und homogene Aushärtung ermöglicht. Versuche haben gezeigt, dass die Aushärtungsgeschwindigkeit aufgrund des zugesetzten Reaktivverdünners um etwa die Hälfte verkürzt werden konnte. Das erfindungsgemäße Harz eignet sich daher sowohl zur Herstellung eines Prepregmaterials als auch als Wickelharz.

Eine bevorzugte Ausführung der erfindungsgemäßen Harzzusammensetzung sieht vor, dass der Reaktivverdünner Ortho-Cresol-Monoglycidyl-Ether ist. Durch das Zufügen dieses Reaktivverdünners kann die Viskosität der Harzmischung nach Bedarf eingestellt werden, wobei auch die Konversionsrate und/oder Polymerisationsgeschwindigkeit eingestellt werden.

Der Erfindung liegt die Überlegung zugrunde, dass die Viskosität einer Epoxidharzmischung durch einen Reaktivverdünner reduziert werden kann. Durch die Verwendung eines Reaktivverdünners ändern sich aber gleichzeitig eine Vielzahl an weiteren Eigenschaften der Harzzusammensetzung, wie beispielsweise die Glasübergangstemperatur, die Reaktionskinetik und die Aushärtegeschwindigkeit. Somit hat der Fachmann bei der Auswahl der Komponenten und deren Anteil diese möglichst exakt aufeinander abzustimmen. Bereits Abweichungen des Anteils des Reaktivverdünners im einstelligen Prozentbereich, können die Viskosität, Konversionsrate und Glasübergangstemperatur um 90 Prozent verändern.

Insbesondere umfasst der Härter ein mehrwertiges Amin. Im Speziellen umfasst der Härter einen sauren Härter, beispielsweise ein Dicarbonsäurehydrid. Besonders bevorzugt ist es, dass der Härter Dicyandiamid ist. Der Anteil des Härters beträgt vorzugsweise zwischen 3 und 10 Gewichtsprozent, insbesondere zwischen 5 und 8 Gewichtsprozent und im Speziellen zwischen 6 und 7 Gewichtsprozent. Dieser Ausgestaltung liegt die Überlegung zugrunde, dass durch die Verwendung eines Härters die Viskosität reduziert werden kann und im Speziellen der Härtungszyklus verkürzt werden kann. Der Härter reduziert die Glasübergangstemperatur jedoch stark. Damit liegt der Erfindung die Überlegung zugrunde, ein Verhältnis von Härter und Reaktivverdünner bereitzustellen, welches kurze Härtungszyklen ermöglicht und eine Glasübergangstemperatur die für den Einsatz in Prepregs geeignet ist. Insbesondere zeichnet sich diese Ausgestaltung durch eine besonders gute, insbesondere rasche, Härtungskinetik aus.

Die weitere Epoxidharz-Komponente ist vorzugsweise ein Epoxid-Novolak-Harz.

Der Initiator ist vorzugsweise 1-Ethyl-3-Methylimidazolium-Dicyanamid.

Vorzugsweise kann der Anteil des Reaktivverdünners an der Harzzusammensetzung 2,5 bis 3 Gewichtsprozent betragen. Im Speziellen beträgt der Anteil des Reaktivverdünners 2,7 Gewichtsprozent.

Bei der erfindungsgemäßen Harzzusammensetzung wird es bevorzugt, dass der Anteil des Phosphor-modifizierten Epoxidharzes 35 bis 85 Gewichtsprozent, vorzugsweise 45 bis 55 Gewichtsprozent beträgt, dass der Anteil der weiteren Epoxidharz-Komponente, insbesondere des Epoxid-Novolak-Harzes 5 bis 60 Gewichtsprozent, vorzugsweise 35 bis 45 Gewichtsprozent beträgt, dass der Anteil des Dicyandiamids 3 bis 10 Gewichtsprozent, vorzugsweise 6 Gewichtsprozent beträgt, dass der Anteil des Initiators 2 bis 10 Gewichtsprozent, vorzugsweise näherungsweise 5,3 Gewichtsprozent beträgt, dass der Anteil des Reaktivverdünners 2 bis 5 Gewichtsprozent, weiter vorzugsweise 2,5 bis 2,8 Gewichtsprozent beträgt, wobei die Summe aller Komponenten 100 Gewichtsprozent ergibt.

Besonders bevorzugt wird eine Harzzusammensetzung mit den folgenden Komponenten: Phosphor-modifiziertes Epoxidharz 50 Gewichtsprozent, Epoxid-Novolak-Harz 36 Gewichtsprozent, Dicyandiamid 6 Gewichtsprozent, Initiator 5,3 Gewichtsprozent, Reaktivverdünner 2,7 Gewichtsprozent.

Gemäß einer weiteren Ausgestaltung der erfindungsgemäßen Harzzusammensetzung kann es vorgesehen sein, dass sie ein mineralisches Flammschutzmittel umfasst.

In diesem Zusammenhang wird es bevorzugt, dass der Gewichtsanteil des mineralischen Flammschutzmittels 20 % bis 60 %, vorzugsweise 20 % bis 40 %, weiter vorzugsweise 30 %, bezogen auf das Gesamtgewicht der aus dem Phosphor-modifizierten Epoxidharz, dem Epoxid-Novolak-Harz, dem Dicyandiamid, dem Katalysator und dem Reaktivverdünner bestehenden Zusammensetzung, beträgt.

Bei dem mineralischen Flammschutzmittel handelt es sich vorzugsweise um Aluminiumhydroxid AL(OH)₃. Als Alternativen kommen Böhmit (AIO(OH)), Magnesiumhydroxid (Mg(OH)₂) und Huntit (CaMg₃[CO3]₄) in Frage.

Daneben betrifft die Erfindung ein Prepregmaterial, umfassend ein Fasermaterial, das mit einer Harzzusammensetzung der beschriebenen Art getränkt ist. Das Fasermaterial umfasst Fasern. Das Prepregmaterial ist ein Halbzeug, das vorzugsweise bahnförmig ausgebildet ist und während eines gewissen Zeitraums gelagert werden kann, bevor es verarbeitet wird. Zur Verarbeitung wird das Prepregmaterial z. B. in einer beheizten Presse erwärmt, wodurch die Aushärtungsreaktion ausgelöst wird. Das Prepregmaterial ist beispielsweise durch ein Hot-melt-Verfahren erhältlich, wobei das Fasermaterial mittels Hitze und Druck mit der Harzzusammensetzung imprägniert wird. Beispielsweise erfolgt das Hot-melt-Verfahren als ein zweistufiger Prozess, wobei in einem ersten Schritt die Fasern und ein Substratspapier vorlaminiert werden, wobei die Fasern beispielsweise durch einen Kamm geführt werden und dann auf ein Trägerpapier gelegt werden, wobei die Fasern dann insbesondere mit einem zweiten Papier bedeckt werden und eine Sandwichanordnung bilden, wobei diese Sandwichanordnung durch beheizbare Walzen gezogen wird und anschließend abgekühlt wird, wobei in einem abschließenden Schritt die Papiere abgezogen werden und das Prepregmaterial vorliegt. Alternativ kann das Prepregmaterial in einem Nass-Verfahren mit einem Lösungsmittel hergestellt werden. Dabei ist die Harzzusammensetzung in einem Lösungsmittel, beispielsweise einem Alkohol oder einem Keton gelöst, wobei die Fasern durch dieses Lösungsmittel gezogen werden und die Harzzusammensetzung an den Fasern gebunden wird, wobei anschließend das Lösungsmittel abgedampft wird und die Fasern vorzugsweise gehärtet und gewalzt werden. Insbesondere kann es vorgesehen sein, dass die Fasern vor dem Imprägnieren mit der Harzzusammensetzung mit einem rauchunterdrückenden Mittel und/oder Brandhemmer behandelt wurden. Insbesondere wurden die Fasern vor dem Imprägnieren mit einem nicht halogenierten flammenhemmenden Mittel getränkt.

Bei dem erfindungsgemäßen Prepregmaterial wird es bevorzugt, dass das Fasermaterial ein Gewebe oder ein Gelege oder wenigstens eine unidirektionale Schicht aufweist. Alternativ oder zusätzlich kann das Fasermaterial auch ein Vlies und/oder eine Wirrfasermatte umfassen. Das Prepregmaterial kann mit einer Folie versehen werden, die bei der Verarbeitung des Prepregmaterials z. B. nach dem Positionieren in der Presse oder einer Form entfernt wird.

Besonders bevorzugt ist es, dass das Fasermaterial eine und/oder eine Mehrzahl an Fasern umfasst. Die Faser ist vorzugsweise eine Kohlenstofffaser oder eine Glasfaser. Ferner kann es vorgesehen sein, dass die Faser eine Aramidfaser ist, insbesondere eine Poly(p-phenylenterephthalamid)-faser oder eine Poly(m-phenylenisophthalamid)-Faser. Im Speziellen kann die Faser auch als eine Naturfaser ausgebildet sein, wobei die Naturfaser vorzugsweise flammenschutzgetränkt ist. Das Fasermaterial kann ferner Metallfasern, beispielsweise Aluminiumfasern, umfassen. Vorzugsweise sind die Fasern flammgeschützte Fasern.

Insbesondere ist es vorgesehen, dass die Fasern des Fasermaterials jeweils mindestens 2000 Einzelfilamente pro Faser umfassen. Im Speziellen umfasst die Faser mehr als 4000 Einzelfilamente und vorzugsweise mehr als 7000 Einzelelemente. Dieser Ausgestaltung liegt die Überlegung zugrunde, dass durch die Verwendung von Einzelelementen die Imprägnierung mit der vorgeschlagenen Harzzusammensetzung besonders optimal ist, so dass so eine effektive Benützung und Imprägnierung des Fasermaterials ermöglicht wird.

Optional ist es vorgesehen, dass die Fasern und oder das Fasermaterial ein Elastizitätsmodul größer als 80 kN/mm², insbesondere größer als 150 kN/mm² aufweist. Vorzugsweise weist die Faser ein spezifisches Gewicht zwischen 1,3 und 2,2 g/cm³ auf. Dieser Ausgestaltung liegt die Überlegung zugrunde, ein Prepregmaterial bereitzustellen, welches besonders geeignet ist für die Verwendung in Flugzeugen. Hierzu sind die Fasern insbesondere unidirektional angeordnet und bilden ein Gestricke, Gewebe oder Gewirk

Besonders bevorzugt ist es, dass der Anteil der Harzzusammensetzung im Prepregmaterial zwischen 30 und 50 Gewichtsprozent beträgt. Im Speziellen kann es vorgesehen sein, dass der Anteil der Harzzusammensetzung im Prepregmaterial zwischen 40 und 45 Gewichtsprozent beträgt. Dieser Ausgestaltung liegt die Überlegung zugrunde ein Prepregmaterial bereitzustellen, welches bei der Verwendung in Sandwichbauteilen ein vermindertes Abschälverhalten aufweist.

Aus dem Prepregmaterial können beispielsweise Hohlkörper wie etwa Rohre zur Anwendung im Klimabereich insbesondere von Luftfahrzeugen hergestellt werden. Hierzu werden in bevorzugten Ausführungsformen auch mehrere, insbesondere ein bis sieben Lagen des Prepregmaterials übereinandergelegt. Dabei können die einzelnen Lagen des Prepregmaterials aus einem gleichartigen oder unterschiedlichen Fasermaterial gebildet werden. Bevorzugt handelt es sich um Glas- oder Kohlefasergewebe, insbesondere um Luftfahrt- oder Industriegewebe. Zusätzlich zu dem Prepreg kann der Hohlkörper auch eine Lage eines Vlieses umfassen. Das Vlies kann in einer Randlage oder Zwischenlage angeordnet sein. Insbesondere ist das Vlies zwischen zwei Lagen des Prepregmaterials angeordnet.

Einen weiteren Gegenstand der Erfindung bildet ein Verbundbauteil. Das Verbundbauteil ist vorzugsweise als eine Sandwichplatte, insbesondere eine Sandwichplatte mit Wabenkern, ausgebildet. Das Verbundbauteil kann eine zweischichtige Verbundkonstruktion, eine dreischichtige Verbundkonstruktion oder eine mehrschichtige Verbundkonstruktion bilden. Das Verbundbauteil weist einen Wabenkern und das Prepregmaterial auf. Insbesondere ist das Prepregmaterial flächig ausgebildet. Das Prepregmaterial bildet auf mindestens einer Seite des Wabenkerns eine Haut. Vorzugsweise bildet das Prepregmaterial auf zwei gegenüberliegenden Seiten des Wabenkerns eine Haut. Insbesondere ist das Prepregmaterial stoffschlüssig mit dem Wabenkern verbunden. Im Speziellen ist es vorgesehen, dass zwischen Prepregmaterial und Wabenkern keine weitere Klebstoffschicht angeordnet ist, sondern die Harzzusammensetzung des Prepregmaterials den Stoffschluss mit dem Wabenkern bildet. Beispielsweise ist das Verbundbauteil dadurch erhältlich, dass der Wabenkern auf einer oder zwei Seiten mit dem Prepregmaterial bedeckt wird, insbesondere in eine Form eingelegt wird und/oder fixiert wird, wobei vorzugsweise in einer Temperaturbehandlung bei erhöhtem Außendruck, beispielsweise in einem Autoklaven, der Stoffschluss hergestellt wird. Mithilfe der vorgeschlagenen Harzzusammensetzung kann ein besonders guter Stoffschluss zwischen Prepregmaterial und Wabenkern erreicht werden, sodass insbesondere die Festigkeitseigenschaften des Verbundbauteils, insbesondere die Ablösewerte, verbessert werden können.

Im Speziellen ist es vorgesehen, dass das Prepregmaterial auf den Wabenkern auflaminiert ist. Beispielsweise wird dazu das Prepregmaterial soweit erhitzt, dass dieses und/oder die Harzzusammensetzung schmilzt und bei Abkühlen den Stoffschluss mit dem Wabenkern bilden kann. Die Harzzusammensetzung des erwärmten Prepregmaterials fließt insbesondere teilweise in die Waben des Wabenkerns.

Besonders bevorzugt ist es, dass der Wabenkern Stege aufweist. Die Stege des Wabenkerns sind beispielsweise durch Begrenzungen und/oder Wabenwände gebildet. Die Harzzusammensetzung fließt bei Erwärmung insbesondere teilweise in die Waben, so dass die Harzzusammensetzung mit den Stegen des Wabenkerns in einem Kontaktbereich stoffschlüssig verbunden ist. Die Harzzusammensetzung bildet im Kontaktbereich einen Meniskus. Insbesondere ist der Meniskus ein konkaver Meniskus.

Der Meniskus im Kontaktbereich weist einen Kontaktwinkel auf. Der Kontaktwinkel ist insbesondere abhängig von der Harzzusammensetzung, dem Material des Wabenkerns und dem Umgebungsmedium. Als Kontaktwinkel wird der Benetzungswinkel verstanden. Im Speziellen ist es vorgesehen, dass der Meniskus einen Kontaktwinkel zwischen 0 und 50 Grad aufweist, vorzugsweise dass der Meniskus einen Kontaktwinkel zwischen 10 und 30 Grad aufweist. Dieser Ausgestaltung liegt die Überlegung zugrunde, dass durch die erfindungsgemäße Harzzusammensetzung ein besonders guter Kontaktwinkel zwischen Steg der Wabe und Prepregmaterial erreicht werden kann, so dass ein Verbundbauteil mit verbesserten mechanischen Eigenschaften bereitgestellt werden kann.

Eine Ausgestaltung der Erfindung sieht vor, dass die Stege des Wabenkerns eine Stegdicke kleiner als 0,7 Mikrometer, im Speziellen kleiner als 0,5 Mikrometer und Vorzugsweise kleiner als 0,1 Mikrometer aufweisen. Durch die Kombination besonders dünner Stege und der erfindungsgemäßen Harzzusammensetzung kann ein besonders leichtes Verbundbauteil bereitgestellt werden, welches ein verringertes Abschälverhalten aufweist.

Besonders bevorzugt ist es, dass der Wabenkern ein Aramidwabenkern, ein Aluminiumwabenkern, ein Glaswabenkern oder ein Papierwabenkern ist. Im speziellen ist es vorgesehen, dass der Wabenkern eine Rohdichte kleiner als 100 kg/m³, insbesondere kleiner als 60 kg/m³ aufweist. Ferner kann es auch vorgesehen sein, dass die Rohdichte des Wabenkerns kleiner ist als 40 kg/m³ und insbesondere kleiner als 30 kg/m³. Die Zellgröße der Waben ist vorzugsweise zwischen 1/8 Zoll und 1/4 Zoll.

Einen weiteren Gegenstand der Erfindung bildet ein Verfahren zur Herstellung des Verbundbauteils. Zur Herstellung des Verbundbauteils wird das Prepregmaterial auf den Wabenkern auflaminiert, wobei das Auflaminieren mittels einer Temperaturbehandlung erfolgt. Die Temperaturbehandlung sieht vor, dass das Prepregmaterial, insbesondere zusammen mit dem Wabenkern, auf eine Laminiertemperatur erwärmt wird. Die Erwärmung auf die Laminiertemperatur erfolgt insbesondere in einem Temperaturprogramm, wobei die Temperaturerhöhung im Temperaturprogramm monoton, vorzugsweise streng monoton, steigend ist. Die Laminiertemperatur ist vorzugsweise kleiner als 180 Grad Celsius, insbesondere kleiner als 160 Grad Celsius und im speziellen kleiner als 140 Grad Celsius. Der Erfindung liegt die Überlegung zugrunde, dass durch die Verwendung der vorgeschlagenen Harzzusammensetzung eine niedrige Laminiertemperatur verwendet werden kann und zugleich mechanisch stabile Verbundbauteile erhalten werden. Insbesondere liegt der Erfindung die Überlegung zugrunde, dass durch die Behandlung mit einer erhöhten Temperatur die Adhäsion zwischen Wabenkern und Harzzusammensetzung abnimmt.

Vorzugsweise erfolgt die Herstellung des Verbundbauteils und im Speziellen die Laminierung zusammen mit einer mechanischen Druckbehandlung und/oder im Vakuum. Das Temperaturprogramm ist beispielsweise eine Temperatursteigerung von Raumtemperatur zu einem ersten Temperaturpunkt, beispielsweise ist der erste Temperaturpunkt zwischen 80 und 100 Grad Celsius, wobei die Temperatur bei dem ersten Temperaturpunkt für eine Haltezeit zwischen 45 und 90 Minuten gehalten wird, wobei anschließend die Temperatur auf die Laminiertemperatur gesteigert wird. Die Temperatursteigerung bei der Laminierung liegt vorzugsweise zwischen 5 und 15 K/min und im speziellen zwischen 8 und 12 K/min. Dieser Ausgestaltung liegt die Überlegung zugrunde, dass mit der vorgeschlagenen Harzzusammensetzung eine 90-prozentige Aushärtung der Harzzusammensetzung nach 30 Minuten bei 140 °C vorliegt und eine 90-prozentige Aushärtung nach 15 Minuten bei 160 °C vorliegt.

Außerdem lassen sich aus dem Prepregmaterial auch Innenausstattungselemente wie etwa Wandelemente insbesondere für Luftfahrzeuge herstellen. Auch hierzu werden mehrere Lagen des Prepregmaterials zu einem Element angeordnet. Insbesondere umfasst ein derartiges Element ein bis sechs Lagen des Prepregmaterials, die in der Press- und Vakuumtechnik geformt werden. Ein Element kann aber auch sieben oder mehr Lagen des Prepregmaterials umfassen. Diese werden bevorzugt mittels der Autoklavtechnik geformt. Weiterhin können für Innenausstattungselemente auch Sandwichelemente hergestellt werden, die einen Kern bevorzugt aus einem Wabenstrukturelement umfassen. Um den Kern sind zu beiden Seiten jeweils eine oder mehrere, insbesondere eine bis zehn Lagen des Prepregmaterials angeordnet. Die Anzahl der Lagen des Prepregmaterials kann auf beiden Seitens des Kerns identisch oder unterschiedlich sein. Insbesondere lokale Verstärkungen durch weiteres Prepregmaterial sind möglich.

Daneben betrifft die Erfindung ein Verfahren zur Herstellung einer Harzzusammensetzung, mit den folgenden Schritten: Erwärmen eines Epoxid-Novolak-Harzes auf eine Temperatur von 40 bis 60 °C, Mischen des Epoxid-Novolak-Harzes und eines Phosphor-modifizierten Epoxidharzes, Erwärmen auf 70 - 120 °C und Rühren der Mischung, Hinzufügen eines Reaktivverdünners, Hinzufügen eines mineralischen, insbesondere pulverförmigen Flammschutzmittels, Hinzufügen von Dicyandiamid als aminischen Härter, wobei die Mischung auf eine Temperatur von 60 - 80 °C abgekühlt wird, Hinzufügen von 1-Ethyl-3-Methylimidazolium-Dicyanamid und Rühren der Mischung.

Die auf diese Weise hergestellte Harzzusammensetzung kann anschließend in einem trockenen und luftdichten Behälter mehrere Wochen bei Raumtemperatur aufbewahrt werden, bevor die Harzzusammensetzung zur Herstellung eines Prepregmaterials verwendet wird.

Die Erfindung wird nachfolgend anhand eines Ausführungsbeispiels erläutert.

Für die Harzzusammensetzung wird Phosphor-modifiziertes Epoxidharz in einem Anteil von 50 Gewichtsprozent verwendet. Es handelt sich um ein Epoxidharz, das mit reaktiven Organophosphor-Komponenten modifiziert ist. Das Epoxidharz zeichnet sich durch ein flammwidriges Verhalten aus. In diesem Ausführungsbeispiel kommt ein Epoxidharz zum Einsatz, das unter der Bezeichnung Struktol Polydis VP 3735 bzw. Struktol Polyphlox 3735 bei der Firma Schill + Seilacher "Struktol" Aktiengesellschaft kommerziell erhältlich ist. Das Phosphor-modifizierte Epoxidharz liegt als Granulat vor. Zunächst wird die benötigte Menge des Granulats abgewogen und in einem Glaskolben vorgelegt. Da aufgrund der Granulatform ein absolut exaktes Abwiegen nicht möglich ist, werden die weiteren Komponenten entsprechend dem Gewicht des Granulats abgewogen.

Als weitere Komponente wird ein Epoxid-Novolak-Harz verwendet. In diesem Ausführungsbeispiel werden davon 36 Gewichtsprozent benötigt. Es handelt sich um ein Reaktionsprodukt von Phenol-Formaldehyd-Novolak mit Epichlorhydrin. Es wird unter der Bezeichnung D.E.N. 431 von der Firma Dow Chemical Company vertrieben.

Zunächst wird das Epoxid-Novolak-Harz in einem Konvektionsofen auf 50 °C vorgewärmt. Anschließend mischt man das Epoxid-Novolak-Harz mit dem Phosphor-modifizierten Epoxidharz und rührt die Mischung bei 600 bis 800 U/min im Ölbad bei 100 °C. Der Rührvorgang wird 15 Minuten lang durchgeführt.

Anschließend wird ein Reaktivverdünner in die Mischung eingerührt. In diesem Ausführungsbeispiel wird der von der Firma Hexion hergestellte Reaktivverdünner "HELOXY Modifier KR" verwendet. Es handelt sich dabei um Ortho-Cresol-Diglycidyl-Ether, dessen Anteil an der gesamten Harzzusammensetzung 2,7 Gewichtsprozent beträgt. Zusätzlich wird ein Flammschutzmittel in die Mischung eingerührt. In diesem Ausführungsbeispiel wird ein mineralisches Flammschutzmittel verwendet, das aus Aluminiumhydroxid besteht. Das Flammschutzmittel wird unter der Bezeichnung APYRAL 33 von der Firma Nabaltec AG vertrieben. Das Flammschutzmittel wird in einem Umfang von 30 %, bezogen auf das Gesamtgewicht der Harzzusammensetzung, umfassend das Epoxidharz, das Epoxid-Novolak-Harz, den Härter, den Katalysator und den Reaktivverdünner dazugegeben. Die auf diese Weise hergestellte Mischung wird 15 Minuten gerührt.

Anschließend wird ein Härter hinzugegeben. Die Temperatur des Ölbads wird dabei auf 75 °C reduziert. In diesem Ausführungsbeispiel wird Dicyandiamid als Härter verwendet, dieses Produkt wird unter der Bezeichnung Amicure CG-1200G von der Firma Air Products vertrieben. Diese Mischung wird wenigstens 20 Minuten lang gerührt. Der Härter wird in einem Umfang von 6 Gewichtsprozent zugegeben.

Anschließend wird ein Initiator zugegeben, es handelt sich dabei um 1-Ethyl-3-Methylimidazolium-Dicyanamid. Der Initiator wird in einem Umfang von 5,3 Gewichtsprozent zugegeben. Der Initiator wird unter der Bezeichnung Basionics VS 03 von der Firma BASF SE vertrieben. Der Initiator wird bei einer Temperatur des Ölbads von 75 °C langsam zugegeben und eingerührt. Der Mischvorgang wird wenigstens 15 Minuten lang durchgeführt.

Die auf diese Weise hergestellte Harzzusammensetzung kann bei Raumtemperatur ca. vier Wochen gelagert werden.

Bei der Herstellung der Harzzusammensetzung ist darauf zu achten, dass trockene Gerätschaften verwendet werden, da der Katalysator stark hygroskopisch wirkt. Da der Katalysator auch mit Luftfeuchte reagiert, wird die hergestellte Harzzusammensetzung in einen Aufbewahrungsbehälter gefüllt, der mit Stickstoff befüllt und Luftdicht verschlossen wird.

Zur Herstellung eines Prepregmaterials wird ein Fasermaterial mit der hergestellten Harzzusammensetzung getränkt. Dieser Imprägnierungsprozess wird in einer automatischen Anlage durchgeführt. Das Fasermaterial, z. B. ein Gewebe, ein Gelege oder eine unidirektionale Schicht, wird auf einer Seite mit einer Folie versehen, wodurch die Handhabung des Prepregmaterials vereinfacht wird. Die Folie wird vor der Verarbeitung des Prepregmaterials entfernt. Als Fasermaterial kommen Glasfasern, Kohlenstoffasern oder andere Verstärkungsfasern in Frage.

Das Prepregmaterial kann zu einem Faserverbundbauteil verarbeitet werden. Dazu wird das Prepregmaterial entsprechend zugeschnitten, anschließend werden eine oder mehrere Lagen des Prepregmaterials z. B. mit einer Wabenstruktur in einer beheizten Presse verpresst. Durch die Erwärmung wird der Aushärteprozess ausgelöst, der nach wenigen Minuten beendet ist.

Die Partikelgrößenverteilung des mineralischen Flammschutzmittels ist so gewählt, dass die Partikel nicht in die Faserbündel des Fasermaterials eindringen und sich somit auf der Prepreg-Oberseite befinden. Im späteren Laminat liegen die Partikel daher an der Laminatoberseite und zwischen den Faserlagen. Dies ist günstig im Hinblick auf das Brandverhalten, da auf diese Weise einer Entzündung der Oberfläche entgegengewirkt wird.

Durch das mineralische Flammschutzmittel werden der Tack (Klebrigkeit) und der Harzfluss verringert.

Das verwendete, in Granulatform vorliegende Phosphor-modifizierte Epoxidharz ist hochmolekular, langsam und hochviskos. Durch den Einsatz des Reaktivverdünners, der ein niedriges Molekulargewicht besitzt, kann die Verarbeitbarkeit wesentlich verbessert werden. Durch den Reaktivverdünner wird eine erhöhte Beweglichkeit der Moleküle der Harzzusammensetzung bewirkt, sodass in der Folge die gewünschte homogene und vollständige Aushärtung erreicht werden kann. Der verwendete Initiator erzeugt "reaktive Zentren", von denen sich der Aushärteprozess ausgeht. Voraussetzung dafür ist die erwähnte molekulare Beweglichkeit, die durch den Reaktivverdünner bewirkt bzw. verbessert wird. Dadurch ergibt sich der weitere Vorteil, dass nur eine vergleichsweise geringe Menge des Initiators benötigt wird, der im Vergleich zu den anderen Komponenten vergleichsweise teuer ist. Somit kann durch das Vorsehen der Reaktivverdünnung eine kostengünstige Harzzusammensetzung erhalten werden.

Weitere Ausgestaltungen und Ausführungen ergeben sich aus den Figuren und deren Beschreibung. Dabei zeigen:
Figur 1a ein Verbundbauteil als ein Ausführungsbeispiel;
Figur 1b eine Explosionsdarstellung des Verbundbauteils;
Figur 1c einen Schnitt durch das Verbundbauteil;
Figur 2 temperaturabhängige Viskositätsverläufe für Mischungsverhältnisse von Harzzusammensetzungen unterschiedlichen Molekulargewichts;
Figur 3a und 3b eine Härtungskinetik eines Ausführungsbeispiels der Harzzusammensetzung;
Figur 4 einen temperaturabhängigen Viskositätsverlauf eines Ausführungsbeispiels der Harzzusammensetzung.

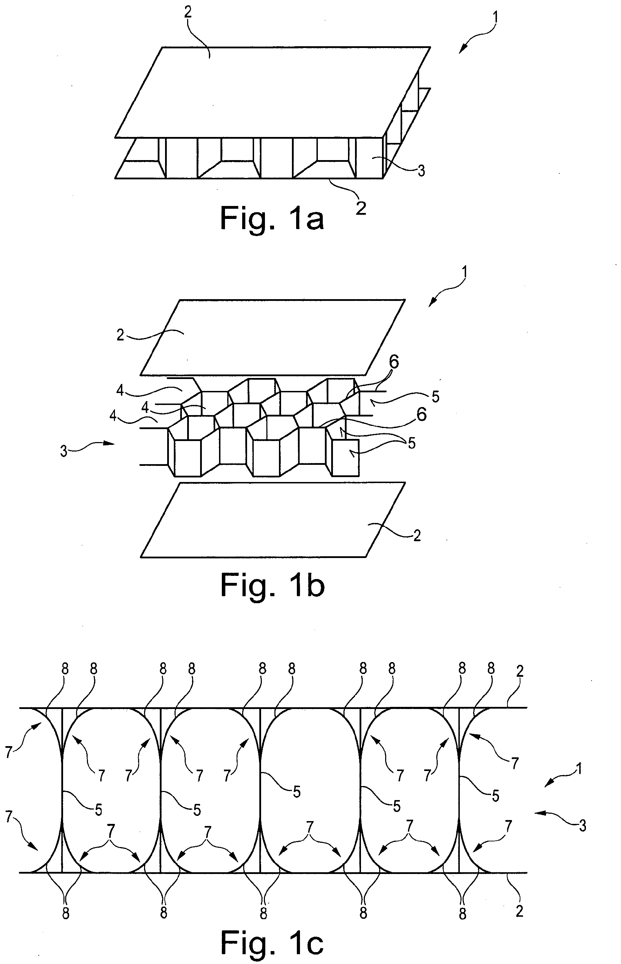

Figur 1a zeigt ein Verbundbauteil 1. Das Verbundbauteil 1 ist ein Sandwichbauteil und insbesondere für den Einsatz in der Luftfahrtindustrie gedacht. In diesem Ausführungsbeispiel ist das Verbundbauteil 1 als eine Platte ausgebildet, alternativ kann das Verbundbauteil 1 auch als ein geformtes Bauteil, insbesondere gebogen, ausgebildet sein. Das Verbundbauteil 1 weist zwei Prepregs 2 auf. Die Prepregs 2 sind flächig ausgebildet. Das Prepreg 2 umfasst das Prepregmaterial und/oder ist von dem Prepregmaterial gebildet. Die Prepregs 2 umfassen vorimprägnierte Fasern und bilden ein Faser-Matrix-Halbzeug. Die Prepregs 2 weisen eine Glasübergangstemperatur größer als 115 °C auf. Die Prepregs 2 sind unter erhöhter Temperatur aushärtbar oder nach einer Behandlung mit erhöhter Temperatur ausgehärtet. Zum Härten der Prepregs 2 ist insbesondere eine Autoklaventechnik oder eine Heißpresstechnik zu verwenden. Die Prepregs 2 umfassen ein Fasermaterial aus einer Mehrzahl an Fasern, wobei die Fasern zu einem Gestricke, Gewebe oder Gewirk angeordnet sind. Die Fasern und oder das Fasermaterial sind mit der vorgeschlagenen Harzzusammensetzung getränkt, wobei das Prepreg 2 zwischen 30 und 50 Gewichtsprozent der Harzzusammensetzung umfasst.

Zwischen den beiden Prepregs 2 ist ein Wabenkern 3 angeordnet. Der Wabenkern 3 bildet einen Stützkern. Der Wabenkern 3 ist beispielsweise als eine Wabenplatte aus Kunststoff, Papier oder Pappe, im Speziellen aus Aramidpapier, ausgebildet. Besonders bevorzugt ist es jedoch dass die Wabenplatte eine Honeycomb-platte bildet. Um besonders zugfeste Verbundbauteile zu erzeugen, kann als Wabenkern 3 ein Aluminiumwabenkern verwendet werden.

Figur 1b zeigt eine Explosionsdarstellung des Verbundbauteils 1 aus Figur 1a. Dabei ist insbesondere die wabenartige Struktur des Wabenkerns 3 zu erkennen. Der Wabenkern 3 umfasst eine Mehrzahl an Waben 4. Die Waben 4 sind in Form eines Polygons, eines Sechsecks ausgebildet. Die Waben 4 werden durch Wabenwände 5 begrenzt. Die Wabenwände 5 bilden Stege 6 aus. Die Stege 6 bzw. die Wabenwände 5 weisen eine Stegdicke auf, wobei die Stegdicke kleiner ist als 0,5 Millimeter.

Figur 1c zeigt einen Querschnitt durch das Verbundbauteil 1 aus Figur 1a. Der Querschnitt zeigt dabei die beiden Prepregs 2 und den Wabenkern 3. Die Prepregs 2 sind in einem Kontaktbereich 78 stoffschlüssig mit den Stegen 6 verbunden. Die stoffschlüssige Verbindung erfolgt durch die Harzzusammensetzung. Durch die Wärmebehandlung der Prepregs 2 verflüssigt sich die Harzzusammensetzung und bildet an den Stegen 6 einen Meniskus 9 aus. Der Meniskus 9 ragt mindestens einen halben Millimeter in die Wabe 4 hinein. Der Meniskus 9 bildet im Inneren der Wabe 4 am Steg 6 einen Kontaktwinkel a, wobei der Kontaktwinkel α zwischen 10° und 50° beträgt. Durch weitere Wärmebehandlung härtet die Harzzusammensetzung aus, sodass Wabenkern 3 und Prepregs 2 fest verbunden sind.

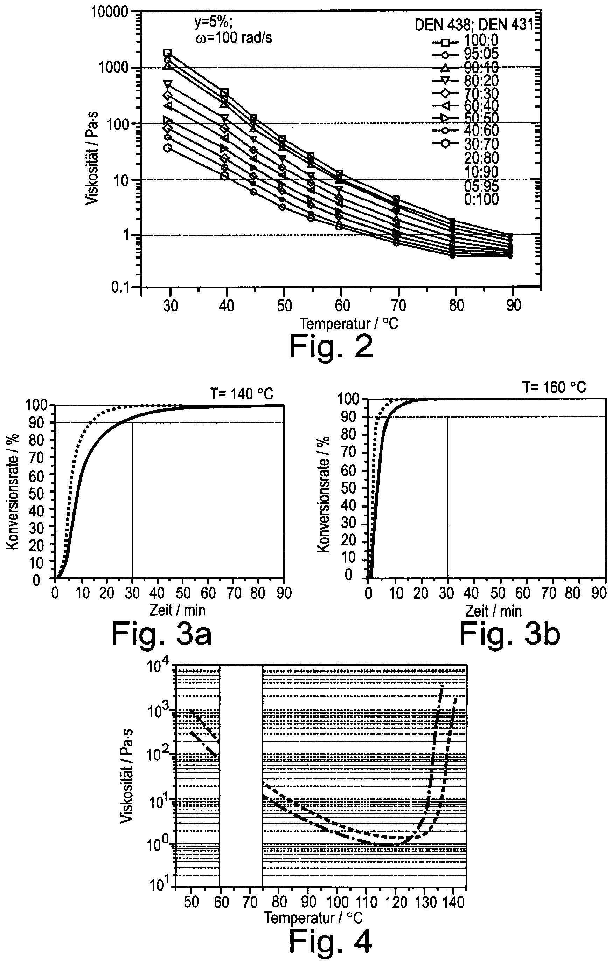

Figur 2 zeigt den temperaturabhängigen Viskositätsverlauf für unterschiedliche Harzzusammensetzungen. Die Harzzusammensetzungen unterscheiden sich in dem Mischungsverhältnis zweier unterschiedlicher Harztypen, nämlich DEN 438 und DEN 431, wobei sich die Harztypen in ihrem Molekulargewicht unterscheiden jedoch nahezu identisches Epoxidäquivalentverhältnis aufweisen. Insbesondere unterscheiden sich die beiden Harztypen DEN 438 und DEN 431 in ihrer Viskosität. Der Viskositätsverlauf zeigt, dass bei steigendem Anteil des viskoseren DEN 438 auch die Viskosität der Harzzusammensetzung steigt. Der Fachmann würde daher zur Einstellung und insbesondere der Reduzierung der Viskosität einer Harzzusammensetzung das Verhältnis von Harztypen unterschiedlichen Molekulargewichts anpassen und variieren.

Figuren 3a und 3b zeigen jeweils einen Verlauf der Konversionsrate in Abhängigkeit der Zeit bei konstanter Temperatur für eine klassische Harzzusammensetzung und ein Ausführungsbeispiel der vorgeschlagenen Harzzusammensetzung. Bei der klassischen Harzzusammensetzung handelt es sich um ein Epoxidharz ohne Reaktivverdünner und ohne Härter. Die klassische Harzzusammensetzung ist dabei gestrichelt gekennzeichnet. Das Ausführungsbeispiel der vorgeschlagenen Harzzusammensetzung ist als durchgezogene Linie aufgetragen und weist 3 % Reaktivverdünner und 6 % Härter auf. Als Reaktivverdünner wurde Heloxy eingesetzt und als Härter Dicyandiamid. Bei Figur 3a beträgt die konstante Temperatur 140 °C und bei Figur 3b 160 °C.

In Figur 3a ist eine 90-prozentige Konversionsrate für die klassische Harzzusammensetzung nach etwa 30 Minuten erreicht. Nach ca. 10 Minuten war für die klassische Harzzusammensetzung etwa 50 % Konversion erreicht. Eine 99-prozentige Konversion war für die klassische Harzzusammensetzung erst nach mehr als 80 Minuten erreicht. Das Ausführungsbeispiel der vorgeschlagenen Harzzusammensetzung zeichnet sich durch eine schnellere Konversion aus. Eine 50-prozentige Konversion war für die vorgeschlagene Harzzusammensetzung in weniger als 5 Minuten erreicht. Eine 90-prozentige Konversion war für die vorgeschlagene Harzzusammensetzung nach 15 erreicht und eine 99-prozentige Konversion nach etwa 30 Minuten. Dieses Ausführungsbeispiel zeigt, dass die vorgeschlagene Harzzusammensetzung sich durch eine besonders rasche Konversionsrate auszeichnet und die Dauer des Härtungszyklus etwa halbiert.

Figur 3b zeigt die Konversion bei einer konstanten Temperatur von 160 °C. Eine 50-prozentige Konversion ist für die vorgeschlagene Harzzusammensetzung und die klassische Harzzusammensetzung nach etwa 3 Minuten erreicht, wobei die 50-prozentige Konversion für die vorgeschlagene Harzzusammensetzung etwas früher erreicht ist. Eine 90-prozentige Konversion wurde für die vorgeschlagene Harzzusammensetzung unter 5 Minuten erreicht; für die klassische Harzzusammensetzung nach etwa 10 Minuten. Eine 99-prozentige Konversion wurde für die vorgeschlagene Harzzusammensetzung nach etwa 10 Minuten erreicht; für die klassische Harzzusammensetzung erst nach 30 Minuten. Auch hier kann dem Verlauf der Konversionsrate entnommen werden, dass die vorgeschlagene Harzzusammensetzung rascher verfestigt und für den Einsatz in Prepregs insbesondere bei der Herstellung mit niedrigeren Temperaturen und kurzen Härtungszyklen besser ist.

Figur 4 zeigt den Viskositätsverlauf einer klassischen Harzzusammensetzung wie aus den Figuren 3a und 3b und dem Ausführungsbeispiel der Harzzusammensetzung aus den Figuren 3a und 3b. Die klassische Harzzusammensetzung ist wieder gestrichelt eingezeichnet und das Ausführungsbeispiel der vorgeschlagenen Harzzusammensetzung in eine durchgezogene Linie. Die Viskosität der klassischen Harzzusammensetzung ist bei einer Anfangstemperatur von 50 °C mehr als 500 Pa*s größer als die Viskosität des Ausführungsbeispiels. Mit steigender Temperatur bis zu einer Temperatur von etwa 120° sinkt die Viskosität beider Harzzusammensetzungen. Für die klassische Harzzusammensetzung beginnt die Viskosität erst über 125 °C wieder zu steigen, wohingegen die Viskosität für das Ausführungsbeispiel der vorgeschlagenen Harzzusammensetzung bereits unter 125 °C die Viskosität wieder zu steigen beginnt. In dem für den Einsatz relevanten Temperaturbereich zwischen 60 und 75 °C ist die Viskosität des vorgeschlagenen Ausführungsbeispiels der Harzzusammensetzung beständig niedriger als für die klassische Harzzusammensetzung. Somit eignet sich die vorgeschlagene Harzzusammensetzung besonders gut für die Herstellung von Prepregs und für die Herstellung von Verbundbauteilen aus den Prepregs.

## Patentansprüche

1. Harzzusammensetzung für ein Prepregharz, umfassend:
- ein Phosphor-modifiziertes Epoxidharz,
- eine weitere Epoxidharz-Komponente,
- einen Härter,
- ein Imidazoliumsalz als Initiator,
**dadurch gekennzeichnet, dass**
die Harzzusammensetzung zur Beschleunigung der Härtung des Phosphor-modifizierten Epoxidharzes einen Reaktivverdünner mit einem Anteil von 2 bis 5 Gewichtsprozent umfasst.

2. Harzzusammensetzung nach Anspruch 1, **dadurch gekennzeichnet, dass** der Reaktivverdünner Ortho-Cresol-Monoglycidyl-Ether ist.

3. Harzzusammensetzung nach Anspruch 1 oder 2, **dadurch gekennzeichnet, dass** der Härter Dicyandiamid ist.

4. Harzzusammensetzung nach einem der vorangehenden Ansprüche, **dadurch gekennzeichnet, dass**
a) der Anteil des Phosphor-modifizierten Epoxidharzes 35 bis 85 Gewichtsprozent, vorzugsweise 45 bis 55 Gewichtsprozent beträgt,
b) der Anteil der weiteren Epoxidharz-Komponente, insbesondere des Epoxid-Novolak-Harzes, 5 bis 60 Gewichtsprozent, vorzugsweise 35 bis 45 Gewichtsprozent beträgt,
c) der Anteil des Dicyandiamids 3 bis 10 Gewichtsprozent, vorzugsweise 6 Gewichtsprozent beträgt,
d) der Anteil des Initiators 2 bis 10 Gewichtsprozent, vorzugsweise näherungsweise 5,3 Gewichtsprozent beträgt,
e) der Anteil des Reaktivverdünners 1 bis 10 Gewichtsprozent, vorzugsweise 2 bis 5 Gewichtsprozent, weiter vorzugsweise 2,5 bis 2,8 Gewichtsprozent beträgt,
wobei die Summe aller Komponenten 100 Gewichtsprozent ergibt.

5. Harzzusammensetzung nach einem der vorangehenden Ansprüche, **dadurch gekennzeichnet, dass** sie ein mineralisches Flammschutzmittel umfasst.

6. Prepregmaterial, umfassend ein Fasermaterial, das mit einer Harzzusammensetzung nach einem der Ansprüche 1 bis 5 getränkt ist.

7. Prepregmaterial nach Anspruch 6, **dadurch gekennzeichnet, dass** das Fasermaterial ein Gewebe oder ein Gelege oder wenigstens eine unidirektionale Schicht aufweist.

8. Prepregmaterial nach einem der Ansprüche 6 oder 7, **dadurch gekennzeichnet, dass** das Fasermaterial eine Aramidfaser, Kohlenstofffaser oder Glasfaser umfasst.

9. Verbundbauteil (1) mit einem Wabenkern (3), **gekennzeichnet durch** mindestens ein Prepregmaterial nach einem der Ansprüche 6 bis 8, wobei das Prepregmaterial den Wabenkern (3) mindestens einseitig als eine Außenhaut bedeckt.

10. Verbundbauteil (1) nach Anspruch 9, **dadurch gekennzeichnet, dass** das Prepregmaterial auf den Wabenkern (3) auflaminiert ist.

11. Verbundbauteil (1) nach einem der Ansprüche 9 oder 10, **dadurch gekennzeichnet, dass** die Harzzusammensetzung des Prepregmaterials mit Stegen (6) des Wabenkerns (5) in einem Kontaktbereich (7) stoffschlüssig verbunden ist, wobei die Harzzusammesetzung im Kontaktbereich einen Meniskus (8) ausbildet.

12. Verbundbauteil (1) nach einem der Ansprüche 9 bis 11, **dadurch gekennzeichnet, dass** der Wabenkern (3) eine Rohdichte kleiner als 60 kg/m³ aufweist und insbesondere eine Rohdichte kleiner als 40 kg/m³ aufweist.

13. Verfahren zur Herstellung des Verbundbauteils (1) nach einem der Ansprüche 9 bis 12, **dadurch gekennzeichnet, dass** das Prepregmaterial nach einem der Ansprüche 6 bis 8 auf den Wabenkern (3) auflaminiert wird, wobei bei dem Auflaminieren das Prepregmaterials auf eine Laminiertemperatur erwärmt wird, wobei die Laminiertemperatur kleiner als 160 Grad ist.

14. Verfahren zur Herstellung einer Harzzusammensetzung, mit den folgenden Schritten:
- Erwärmen eines Epoxid-Novolak-Harzes auf eine Temperatur von 40 °C bis 60 °C,
- Mischen des Epoxid-Novolak-Harzes und eines Phosphor-modifizierten Epoxidharzes,
- Erwärmen auf 70 - 120 °C und Rühren der Mischung,
- Hinzufügen eines Reaktivverdünners,
- Hinzufügen eines mineralischen Flammschutzmittels,
- Hinzufügen eines aminischen Härters, wobei die Mischung auf eine Temperatur von 60
- 80 °C abgekühlt wird,
- Hinzufügen von 1-Ethyl-3-Methylimidazolium-Dicyanamid und
Rühren der Mischung.

## Claims

1. Resin composition for a prepreg resin, comprising:
- a phosphorus-modified epoxy resin,
- a further epoxy resin component,
- a hardener,
- an imidazolium salt as initiator,
**characterized in that**
for accelerating the hardening of the phosphorus-modified epoxy resin, the resin composition comprises a proportion of 2 to 5% by weight of a reactive diluent.

2. Resin composition according to Claim 1, **characterized in that** the reactive diluent is ortho-cresol monoglycidyl ether.

3. Resin composition according to Claim 1 or 2, **characterized in that** the hardener is dicyandiamide.

4. Resin composition according to any of the preceding claims, **characterized in that**
a) the proportion of the phosphorus-modified epoxy resin is 35 to 85% by weight, preferably 45 to 55% by weight,
b) the proportion of the further epoxy resin component, in particular of the epoxy Novolak resin, is 5 to 60% by weight, preferably 35 to 45% by weight,
c) the proportion of the dicyandiamide is 3 to 10% by weight, preferably 6% by weight,
d) the proportion of the initiator is 2 to 10% by weight, preferably approximately 5.3% by weight, and
e) the proportion of the reactive diluent is 1 to 10% by weight, preferably 2 to 5% by weight, more preferably 2.5 to 2.8% by weight, where the entirety of all components provides 100% by weight.

5. Resin composition according to any of the preceding claims, **characterized in that** it comprises a mineral flame retardant.

6. Prepreg material, comprising a fibre material saturated with a resin composition according to any of Claims 1 to 5.

7. Prepreg material according to Claim 6, **characterized in that** the fibre material comprises a woven fabric or a laid scrimp or at least one unidirectional layer.

8. Prepreg material according to Claim 6 or 7, **characterized in that** the fibre material comprises an aramid fibre, carbon fibre or glass fibre.

9. Composite component (1) with a honeycomb core (3), **characterized by** at least one prepreg material according to any of Claims 6 to 8, where the prepreg material in the form of an external skin covers the honeycomb core (3) at least on one side.

10. Composite component (1) according to Claim 9, **characterized in that** the prepreg material has been laminated onto the honeycomb core (3).

11. Composite component (1) according to Claim 9 or 10, **characterized in that** the resin composition of the prepreg material has been bonded coherently to fillets (6) on the honeycomb core (5) in a contact region (7), wherein the resin composition develops a meniscus (8) in the contact region.

12. Composite component (1) according to any of Claims 9 to 11, **characterized in that** the envelope density of the honeycomb core (3) is below 60 kg/m³ and in particular below 40 kg/m³.

13. Process for the production of the composite component (1) according to any of Claims 9 to 12, **characterized in that** the prepreg material according to any of Claims 6 to 8 is laminated onto the honeycomb core (3), where during the lamination the prepreg material is heated to a lamination temperature, where the lamination temperature is below 160 degrees.

14. Process for the production of a resin composition, with the following steps:
- heating of an epoxy Novolak resin to a temperature of 40°C to 60°C,
- mixing of the epoxy Novolak resin and of a phosphorus-modified epoxy resin,
- heating to 70-120°C and stirring of the mixture,
- addition of a reactive diluent,
- addition of a mineral flame retardant,
- addition of an aminic hardener, where the mixture is cooled to a temperature of 60-80°C,
- addition of 1-ethyl-3-methylimidazoliumdicyanamide and
stirring of the mixture.

## Revendications

1. Composition de résine pour une résine de préimprégnation, comprenant :
- une résine époxy modifiée par du phosphore,
- un composant supplémentaire de type résine époxy,
- un agent de durcissement,
- un sel d'imidazolium en tant qu'initiateur, **caractérisée en ce que** la composition de résine comprend un diluant réactif en une proportion de 2 à 5 pour cent en poids pour l'accélération du durcissement de la résine époxy modifiée par du phosphore.

2. Composition de résine selon la revendication 1, **caractérisée en ce que** le diluant réactif est l'éther de monoglycidyle d'ortho-crésol.

3. Composition de résine selon la revendication 1 ou 2, **caractérisée en ce que** l'agent de durcissement est le dicyandiamide.

4. Composition de résine selon l'une quelconque des revendications précédentes, **caractérisée en ce que**
a) la proportion de la résine époxy modifiée par du phosphore est de 35 à 85 pour cent en poids, de préférence 45 à 55 pour cent en poids,
b) la proportion du composant supplémentaire de type résine époxy, en particulier de la résine époxy-novolak, est de 5 à 60 pour cent en poids, de préférence 35 à 45 pour cent en poids,
c) la proportion du dicyandiamide est de 3 à 10 pour cent en poids, de préférence 6 pour cent en poids,
d) la proportion de l'initiateur est de 2 à 10 pour cent en poids, de préférence approximativement 5,3 pour cent en poids,
e) la proportion du diluant réactif est de 1 à 10 pour cent en poids, de préférence 2 à 5 pour cent en poids, encore plus préférablement 2,5 à 2,8 pour cent en poids,
la somme de tous les composants donnant 100 pour cent en poids.

5. Composition de résine selon l'une quelconque des revendications précédentes, **caractérisée en ce qu'**elle comprend un agent ignifugeant minéral.

6. Matériau préimprégné, comprenant un matériau fibreux, qui est imprégné avec une composition de résine selon l'une quelconque des revendications 1 à 5.

7. Matériau préimprégné selon la revendication 6, **caractérisé en ce que** le matériau fibreux présente un tissu ou une nappe ou au moins une couche unidirectionnelle.

8. Matériau préimprégné selon l'une quelconque des revendications 6 et 7, **caractérisé en ce que** le matériau fibreux comprend une fibre d'aramide, une fibre de carbone ou une fibre de verre.

9. Pièce composite (1) dotée d'un noyau en nid d'abeille (3), **caractérisée par** au moins un matériau préimprégné selon l'une quelconque des revendications 6 à 8, le matériau préimprégné recouvrant le noyau en nid d'abeille (3) au moins sur un côté en tant qu'enveloppe externe.

10. Pièce composite (1) selon la revendication 9, **caractérisée en ce que** le matériau préimprégné est stratifié sur le noyau en nid d'abeille (3).

11. Pièce composite (1) selon l'une quelconque des revendications 9 et 10, **caractérisée en ce que** la composition de résine du matériau préimprégné est reliée matériellement avec des nervures (6) du noyau en nid d'abeille (5) dans une zone de contact (7), la composition de résine formant un ménisque (8) dans la zone de contact.

12. Pièce composite (1) selon l'une quelconque des revendications 9 à 11, **caractérisée en ce que** le noyau en nid d'abeille (3) présente une densité brute inférieure à 60 kg/m³ et en particulier une densité brute inférieure à 40 kg/m³.

13. Procédé pour la préparation de la pièce composite (1) selon l'une quelconque des revendications 9 à 12, **caractérisé en ce que** le matériau préimprégné selon l'une quelconque des revendications 6 à 8 est stratifié sur le noyau en nid d'abeille (3), le matériau préimprégné étant chauffé à une température de stratification lors de la stratification, la température de stratification étant inférieure à 160 degrés.

14. Procédé pour la préparation d'une composition de résine, comportant les étapes suivantes :
- chauffage d'une résine d'époxy-novolak à une température de 40 °C à 60 °C,
- mélange de la résine d'époxy-novolak et d'une résine époxy modifiée par du phosphore,
- chauffage à une température de 70 à 120 °C et agitation du mélange,
- ajout d'un diluant réactif,
- ajout d'un agent ignifugeant minéral,
- ajout d'un agent de durcissement de type amine, le mélange étant refroidi à une température de 60 à 80 °C,
- ajout de 1-éthyl-3-méthylimidazolium-dicyanamide et agitation du mélange.
